(19) Europäisches Patentamt
European Patent Office
Office européen des brevets

(11) **EP 4 112 887 A1**

(12) **EUROPEAN PATENT APPLICATION**

(43) Date of publication:
**04.01.2023 Bulletin 2023/01**

(21) Application number: **22191978.0**

(22) Date of filing: **11.09.2019**

(51) International Patent Classification (IPC):
*F01D 17/16* (2006.01)   *F02C 9/20* (2006.01)
*F04D 29/56* (2006.01)   *F02K 3/075* (2006.01)

(52) Cooperative Patent Classification (CPC):
**F01D 17/162; F02C 9/20; F02K 3/075;
F04D 29/323; F04D 29/56**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.09.2018   US 201816128973**

(62) Document number(s) of the earlier application(s) in
accordance with Art. 76 EPC:
**19196803.1 / 3 623 586**

(71) Applicant: **Raytheon Technologies Corporation
Farmington, CT 06032 (US)**

(72) Inventor: **FILIPENCO, Victor G.
Portland, 06480 (US)**

(74) Representative: **Dehns
St. Bride's House
10 Salisbury Square
London EC4Y 8JD (GB)**

Remarks:
This application was filed on 24.08.2022 as a
divisional application to the application mentioned
under INID code 62.

(54) **VARIABLE BYPASS RATIO FAN WITH VARIABLE PITCH AFT STAGE ROTOR BLADING**

(57)     A gas turbine engine includes a fan section (12). A splitter (52) is downstream of the fan section (12) and at least partially defines a secondary flow path (34) on a radially outer side and an inner flow path (36) on a radially inner side. A variable pitch rotor assembly (56) is located at an inlet to the inner flow path (36) and includes a plurality of variable pitch rotor blades (58).

FIG.2

**Description**

**BACKGROUND**

A gas turbine aircraft propulsion engine typically includes a fan section, a compressor section, a combustor section, and a turbine section. In general, during operation, air is compressed in the fan and compressor sections and is mixed with fuel and burned in the combustor section to generate hot combustion gases. The hot combustion gases flow through the turbine section, which extracts energy from the hot combustion gases to power the compressor section, the fan section, and other gas turbine engine loads. Efficiency of the gas turbine engine may decrease if a decrease of the pressure ratio of the compressor section occurs.

**SUMMARY**

From one aspect, there is provided a gas turbine engine that includes a fan section. A splitter is downstream of the fan section and at least partially defines a secondary flow path on a radially outer side and an inner flow path on a radially inner side. A variable pitch rotor blade assembly is located at an inlet to the inner flow path and includes a plurality of variable pitch rotor blades.

In an embodiment of the above, the plurality of variable pitch rotor blades rotate about a rotor blade axis that is transverse to an axis of rotation of the gas turbine engine.

In a further embodiment of any of the above, the rotor blade axis is perpendicular to an axis of rotation of the gas turbine engine.

In a further embodiment of any of the above, the fan section includes more than one fan blade row.

In a further embodiment of any of the above, the fan section includes at least one fan blade row with a stator row immediately downstream of at least one fan blade row and immediately upstream of the variable pitch rotor blade assembly. The stator row includes a plurality of non-rotatable vanes.

In a further embodiment of any of the above, the fan section includes at least one fan blade row with a stator row immediately downstream of at least one fan blade row and immediately upstream of the variable pitch rotor blade assembly. The stator row includes a plurality of rotatable vanes configured to rotate about an axis through a corresponding vane.

In a further embodiment of any of the above, the fan section includes a vane row immediately downstream of a fan blade row and immediately upstream of the inner flow path.

In a further embodiment of any of the above, an inlet guide vane is immediately downstream of an inlet to the fan section.

In a further embodiment of any of the above, the variable pitch rotor assembly is located downstream of the fan section.

In a further embodiment of any of the above, each of the plurality of variable pitch rotor blades include a spindle rotatably supported on at least one bearing.

In a further embodiment of any of the above, each of the spindles are attached to a separate lever arm that rotates the spindle in response to movement from a hydraulic actuator.

In a further embodiment of any of the above, the secondary flow path is a bypass flow path.

In another aspect, there is provided a method of varying a bypass ratio of a gas turbine engine that includes driving a fan section with a turbine section. The fan section directs air along a secondary flow path and an inner flow path. A pitch of a plurality of variable pitch rotor blades in a variable pitch rotor assembly in the core airflow path is varied in response to a change bypass ratio of the gas turbine engine.

In a further embodiment of any of the above, a high pressure ratio across the plurality of variable pitch rotor blades is maintained when operating at the gas turbine engine by varying the pitch of the plurality of variable pitch rotor blades.

In a further embodiment of any of the above, the variable pitch rotor assembly is located in a compressor section of the gas turbine engine.

In a further embodiment of any of the above, the pitch of the plurality of variable pitch rotor blades is increased in response to a decrease the bypass ratio of the gas turbine engine.

In a further embodiment of any of the above, the pitch of the plurality of variable pitch rotor blades is decreased in response to an increase in the bypass ratio of the gas turbine engine.

In a further embodiment of any of the above, the pitch of the plurality of variable pitch rotor blades is varied with an actuator.

In a further embodiment of any of the above, the fan section includes at least one fan blade row with a stator immediately downstream of at least one fan blade row and immediately upstream of the variable pitch rotor assembly. The stator includes a plurality of non-rotatable vanes.

In a further embodiment of any of the above, the fan section includes at least one fan blade row with a stator immediately downstream of at least one fan blade row and immediately upstream of the variable pitch rotor assembly. The stator includes a plurality of rotatable vanes that rotate about an axis through a corresponding vane.

**BRIEF DESCRIPTION OF THE DRAWINGS**

Figure 1 illustrates an example gas turbine engine.
Figure 2 illustrates an enlarged view of a portion of the example gas turbine engine of Figure 1.
Figure 3 illustrates an enlarged view of another example fan section.
Figure 4 illustrates velocity triangles for a conventional approach for holding leading edge incidence as rotor inlet flow is varied at constant rotor speed.
Figure 5 illustrates velocity triangles and blade stagger angle settings for variable pitch aft Fan Rotor operation at "Low" and "High" bypass ratios.

**DETAILED DESCRIPTION**

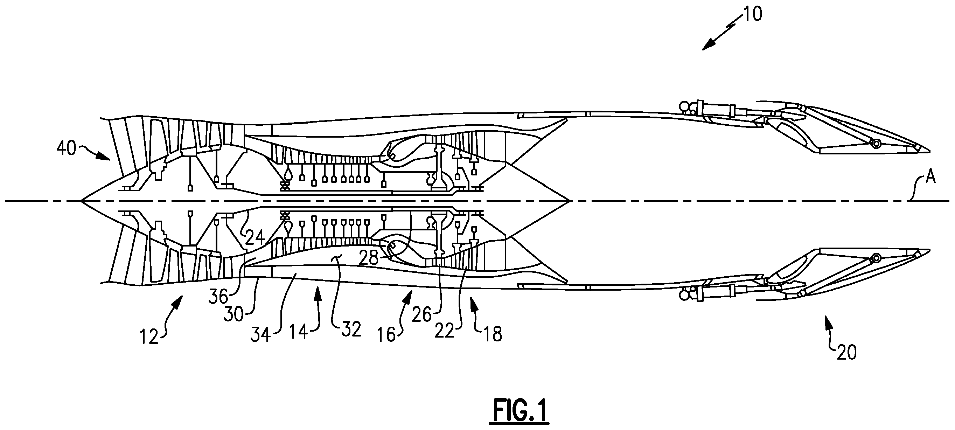

Figure 1 schematically illustrates a gas turbine engine 10. The gas turbine engine 10 is disclosed herein as a two-spool turbofan that generally incorporates a fan section 12, a compressor section 14, a combustor section 16, a turbine section 18, and a nozzle section 20. The sections are defined along a central longitudinal engine axis A.

The compressor section 14, the combustor section 16, and the turbine section 18 are generally referred to as the engine core. The fan section 12 and a low pressure turbine 22 of the turbine section 18 are coupled by a first shaft 24 to define a low spool. The compressor section 14 and a high pressure turbine 26 of the turbine section 18 are coupled by a second shaft 28 to define a high spool.

An outer engine case structure 30 and an inner engine structure 32 define a generally annular secondary flow path 34 around an inner flow path 36. It should be understood that various structure within the gas turbine engine 10 may define the outer engine case structure 30 and the inner engine structure 32 which essentially define an exoskeleton to support the core engine therein.

Air which enters the fan section 12 is divided between an inner flow through the inner flow path 36 and a secondary or bypass flow through the secondary flow path 34. The inner flow passes through the compressor section 14, the combustor section 16, the turbine section 18, and then through the nozzle section 20. The secondary flow may be utilized for a multiple of purposes to include, for example, cooling and pressurization. The secondary flow as defined herein is any flow different from the primary combustion gas exhaust core flow. The secondary flow passes through an annulus defined by the outer engine case structure 30 and the inner engine structure 32 then may be at least partially injected into the core flow adjacent the nozzle section 20.

The gas turbine engine 10 shown in Figure 1 operates on the Brayton thermodynamic cycle, the ideal thermodynamic efficiency of which depends only on the cycle pressure ratio as given by Equation 1:

$$\eta_{th} = 1 - \frac{1}{(\Pi_{overall})^{\frac{\gamma-1}{\gamma}}} \qquad \text{Equation}$$

(1)

As shown in Equation 1, the thermodynamic efficiency ($\eta_{th}$) of an engine, such as the gas turbine engine 10, operating on the Brayton cycle increases with increasing overall cycle pressure ratio ($\Pi_{overall}$) at a given ratio of specific heats ($\gamma=C_p/C_v$).

The overall pressure ratio of the gas turbine engine 10 corresponds to the ratio of a burner inlet total pressure at the combustor section 16 to an engine inlet total pressure and is generally equal to the product of the pressure ratios of the fan section 12 and compressor section 14. The pressure ratio of any additional compression stage or stages which may be disposed in series with the fan section 12 and the compressor section 14 would likewise multiplicatively affect the overall engine pressure ratio of the gas turbine engine 10.

Although the real gas turbine cycle efficiency is also a function of component efficiencies and other factors, the overall engine pressure ratio represents a dominant factor in the thermodynamic efficiency of engine 10. Therefore, any factor which may decrease the overall pressure ratio of engine 10 would generally decrease the thermodynamic efficiency of the gas turbine engine 10.

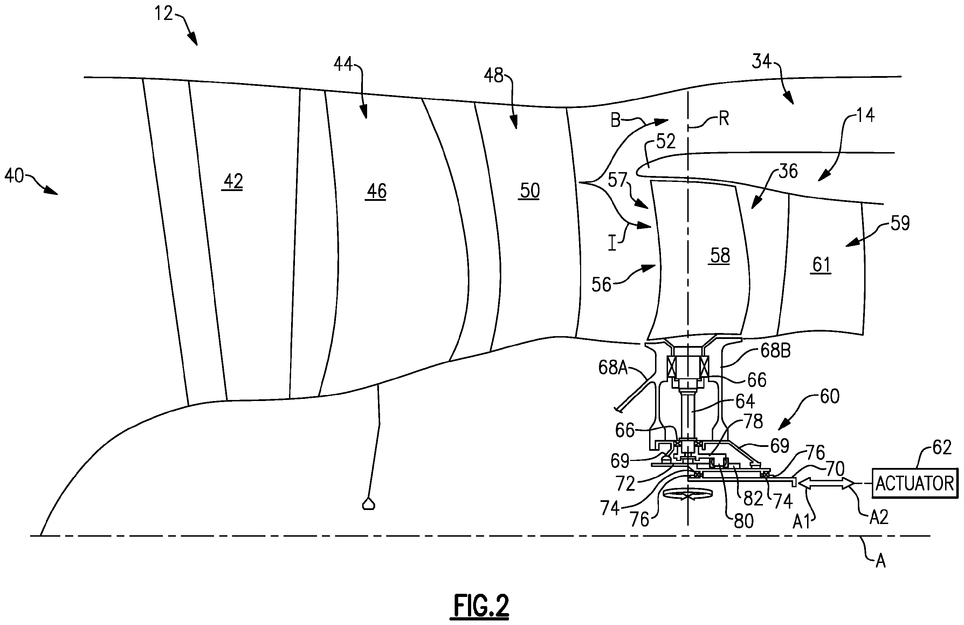

Figure 2 illustrates an enlarged view of the gas turbine engine 10. Air enters the gas turbine engine 10 through an inlet 40 to the fan section 12. Once the air enters the inlet 40, it passes over a plurality of inlet guide vanes 42 that are circumferentially spaced around an engine axis A, a single fan 44 having a row of a plurality of fan blades 46, and a fan stator 48 having a row of a plurality of vanes 50 immediately downstream of the single fan 44. In the illustrated example, the vanes 50 of the fan stator 48 are fixed from rotation and non-rotatable. In another example, each of the vanes 50 are rotatable about a separate axis transverse to the engine axis A to vary a pitch of the vanes 50.

As the air passes the fan stator 48, it reaches a splitter 52 where it is divided between bypass airflow B and inner airflow I. The bypass airflow B passes through the secondary flow path 34 located radially outward from the splitter 52 and is ejected out of an aft portion of the gas turbine engine 10. The inner airflow I passes through inner flow path 36 to variable blade pitch rotor 56 and stator 59 where its pressure is increased and then to compressor section 14 where it is further compressed before being heated in the combustor section 16 and expanded in the turbine section as discussed above (See Figures 1 and 2).

The inner flow path 36 includes a variable pitch rotor assembly 56 having a plurality of variable pitch blades 58 forming a row. A stator 59 is located immediately downstream of the variable pitch rotor assembly 56 and includes a plurality of vanes 61 forming a row. The variable pitch blades 58 of the variable pitch rotor assembly 56 are located immediately downstream of an inlet 57 to the inner flow path 36. The variable pitch blades 58 are rotatable about an axis of rotation R that is transverse or perpendicular to the engine axis A. As the variable pitch blades 58 rotate in unison about the axis of rotation R during operation, the corrected airflow rate through the inner flow path 36 and the secondary flow path 34 varies.

The variable pitch rotor assembly 56 may be located concentrically with and rotatable about engine centerline A and may be attached directly to the same shaft as fan blades 46 or may be driven through a gearbox off of the single fan 44 shaft or through a gearbox off of the high pressure spool of the engine or may be part of a separate engine spool independent of the fan and core spools.

During operation of the gas turbine engine 10, operating conditions may arise such that it is desirable to increase or decrease bypass airflow B in the secondary flow path 34 while simultaneously decreasing or increasing the flow in the inner flow path 36, respectively. When a lower bypass ratio for the gas turbine engine 10 is desired, for example at a fixed value of inlet airflow and rotor speed, which may be achieved in part by the closing of a variable nozzle at the exit of secondary flow path 34, an increase in airflow through the inner flow path 36 is required, corresponding to the decrease in bypass airflow through the secondary flow path 34. Concurrently with the increase in the air flow through the inner flow path 36, the variable pitch blades 58 are rotated to an increased pitch angle as required in order to maintain an optimum incidence angle on each of the variable pitch blades 58, thereby matching the flow capacity of the variable pitch rotor assembly 56 to the increase in airflow through the inner flow path 36 and maintaining the pressure ratio across the variable pitch rotor assembly 56.

Conversely, when an increase in the bypass ratio for the gas turbine engine 10 is desired, a reduction in airflow through the inner flow path 36 is required corresponding in magnitude to the increase in bypass airflow through the secondary flow path 34. Concurrently with the decrease in airflow through the inner flow path 36, the variable pitch blades 58 are rotated to a decreased pitch angle as required in order to maintain an optimum incidence angle on the variable pitch blades 58, thereby matching the flow capacity of the variable pitch rotor assembly 56 to the decrease in airflow through the inner flow path 36 and maintaining the pressure ratio across the variable pitch rotor assembly 56. Certain flight regimes require large changes in bypass ratio at high power.

The pressure ratio across the variable pitch rotor assembly 56 provides a significant contribution to the overall engine pressure ratio as described above and therefore by equation (1) to the overall cycle thermodynamic efficiency. For a constant-radius section through the variable pitch blade 58 from the leading edge to the trailing edge, it can be shown using Euler's turbine equation together with basic thermodynamic relationships that the pressure ratio across the rotor can be expressed as follows in Equation 2:

$$\left(\frac{Pt_2}{Pt_1}\right) = \left(\frac{U(C_{\theta 2} - C_{\theta 1})}{C_p T_{T1}} + 1\right)^{\frac{\gamma \eta_{poly,T-T}}{(\gamma - 1)}} \qquad \text{Equation}$$

(2)

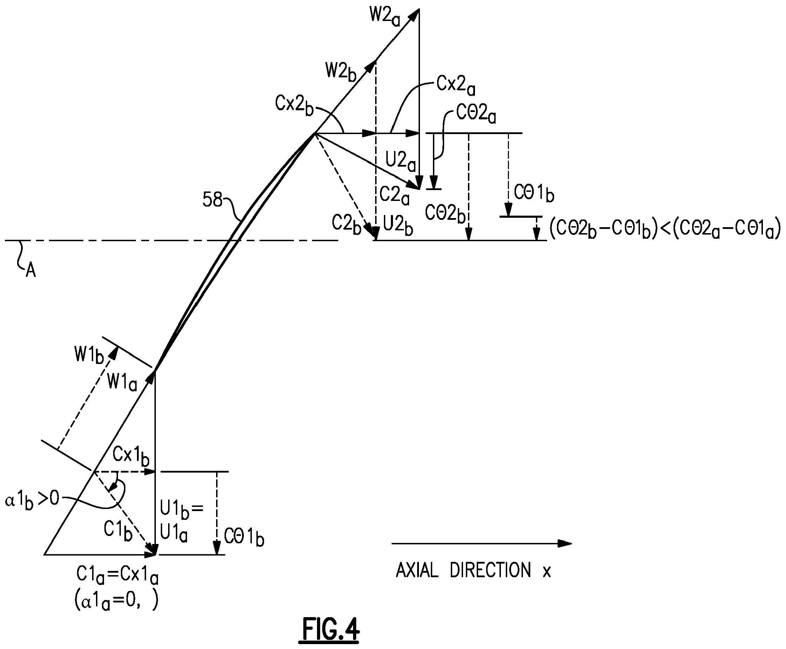

The conventional response to variations in rotor inlet flow coefficient φ1 and thus to variations in the rotor inlet flow is to vary the angle of the upstream fan stator 48, thereby varying the swirl at the leading edge of a fixed pitch rotor which may be located at the same location in the engine as variable pitch rotor 56 as shown schematically in Figure 4. As the rotor φ1 (flow coefficient) is decreased corresponding to a decrease in the rotor inlet flow and in C×1 (air axial velocity) in the example given in Figure 4 where blade speed U is held constant (corresponding to for example a "high power" flight condition), the pre-whirl angle α1 must be increased in order to maintain an optimum leading edge rotor incidence angle as depicted by the dashed velocity triangle diagram in Figure 4.

Conversely, an increase in the rotor φ1 (flow coefficient), corresponding to an increase in rotor inlet flow and therefore to an increase in C×1 (air axial velocity), requires a decrease in the rotor inlet pre-whirl angle α1 with a corresponding decrease in circumferential velocity Cθ1 (circumferential velocity at the leading edge of the rotor blades, to zero in the illustrative example given in Figure 4) in order to maintain an optimum rotor leading edge incidence as depicted by the solid velocity triangle diagram in Figure 4.

The required increase in Cθ1 accompanying a decrease in rotor inlet flow at constant rotor blade speed U (corresponding to for example a high power engine operating condition) leads to a reduction in the change in absolute angular velocity across the rotor, i.e. to $(Cθ2_b - Cθ1_b) < (Cθ2_a - Cθ1_a)$ as shown in the dashed and solid velocity triangle diagrams given in Figure 4, which by Equation (2) corresponds to a reduction in the rotor pressure ratio and therefore to the reduction of the overall cycle pressure ratio, and hence to a reduction in the engine thermodynamic efficiency as shown by Equation (1).

Conventional engines utilize a variable pitch upstream stator with a fixed-pitch rotor in order to maintain an optimum rotor leading edge incidence in response to inlet flow variations as depicted schematically in Figure 4. The variable pitch rotor assembly 56 eliminates the requirement for any variability in the upstream swirl angle α1 introduced through a variable pitch stator. Instead, the variable pitch blades 58 stagger angle is varied as required in order to maintain the leading edge incidence at the optimum value in response to changes in the inlet flow coefficient φ1 and hence to changes in the bypass ratio.

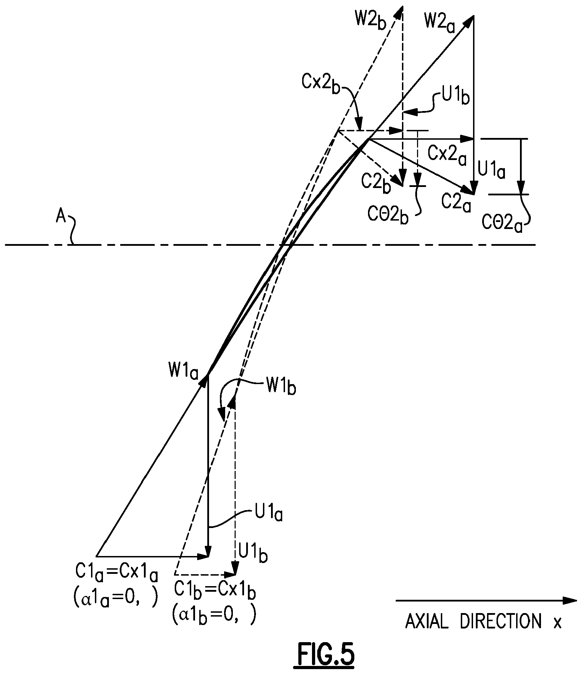

An advantage of the variable pitch rotor assembly 56 compared to a fixed blade pitch rotor is that the significant reduction in the rotor pressure ratio resulting from the increase in rotor pre-whirl which is required in response to a reduction in rotor inlet flow in order to maintain an optimum rotor leading edge incidence angle as described above and depicted schematically in Figure 4 may be greatly reduced or completely eliminated. This is demonstrated in Figure 5 in an example in which α1 (rotor pre-swirl angle) = 0 and hence C91 (circumferential velocity immediately upstream of the rotor) =0 at both high and low bypass conditions (achieved through a fixed upstream fan stator 48).

As shown in Figure 5, the variable blade pitch rotor velocity triangles may be configured such that the absolute tangential velocity, Cθ2, at the exit of the variable pitch rotor assembly 56 remains essentially constant in response to the transition between the low bypass ("high" rotor inlet flow) operating condition depicted by the solid velocity triangles and the high bypass ("low" rotor inlet flow) operating condition, depicted by the dashed velocity triangles as the rotor blade stagger angle is adjusted in response to the rotor inlet flow variations as required in order to maintain an optimum rotor leading edge incidence.

As shown by Equation (2), the invariance of Cθ2 in response to variations in bypass ratio corresponds to an invariance in the rotor pressure ratio for the example depicted in Figure 5, resulting in an overall cycle pressure ratio at high bypass conditions comparable to that at low bypass conditions. In contrast, the conventional method depicted in Figure 4 leads to a significant reduction in a rotor pressure ratio in response to an increase in bypass ratio. This would produce a decrease in the overall cycle pressure ratio and therefore a decrease in the thermodynamic efficiency of the conventional engine.

An additional advantage of the variable pitch rotor assembly 56 is that the variation of the angle of the absolute velocity vector C2 corresponding to a transition between operation at "low" and "high" bypass ratio is reduced as seen in Figure 5 (comparing the angle between C2b and C2a) in comparison to that seen in the fixed blade pitch configuration of Figure 4. The reduced variation in the angle of velocity vector C2 in response to transitions in the bypass ratio corresponds to a reduced leading edge incidence variation at the downstream stator 59. This facilitates operation closer to the condition of minimum loss in the downstream stator 59 over the full bypass ratio range as compared to the conventional configuration depicted in Figure 4.

As shown in Figure 2, the variable pitch blades 58 are rotated through an example non-limiting embodiment of a rotatable blade mechanism 60 connected with an actuator 62, such as a hydraulic actuator. However, other rotatable blade mechanisms and actuators could be used with this disclosure. Each of the variable pitch blades 58 include a spindle 64 rotatably supported on bearings 66 that are connected to a forward disk portion 68A and/or an aft disk portion 68B and to radially inner portions 69 of the rotatable blade mechanism 60.

The actuator 62 moves a slider 70 in either an axially forward direction A1 or an axially aft direction A2. The slider 70 is rotatably attached to a rotatable disk 72 through bearings 74. The slider 70 is fixed axially relative to the rotatable disk 72 with locks 76 abutting the bearings 74 and projections on both the slider 70 and the rotatable disk 72. A lever arm 78 is attached to a radially inner end of spindle 64 with a fastener and includes a slider projection 80 on a distal end of the lever arm 78. The slider projection 80 fits within a corresponding slot 82 in the rotatable disk 72. The slot 82 includes a directional component in an axial direction and in a tangential direction such that movement of the rotatable disk 72 in either the axially forward A1 or aft A2 direction causes the lever arm 78 to rotate the spindle 64 and the variable pitch blade 58 in the desired direction. Even though only a single rotatable blade mechanism 60 is shown in the illustrated example, a corresponding rotatable blade mechanism 60 associated with each of the variable pitch blades 58 circumferentially spaced around the engine axis A.

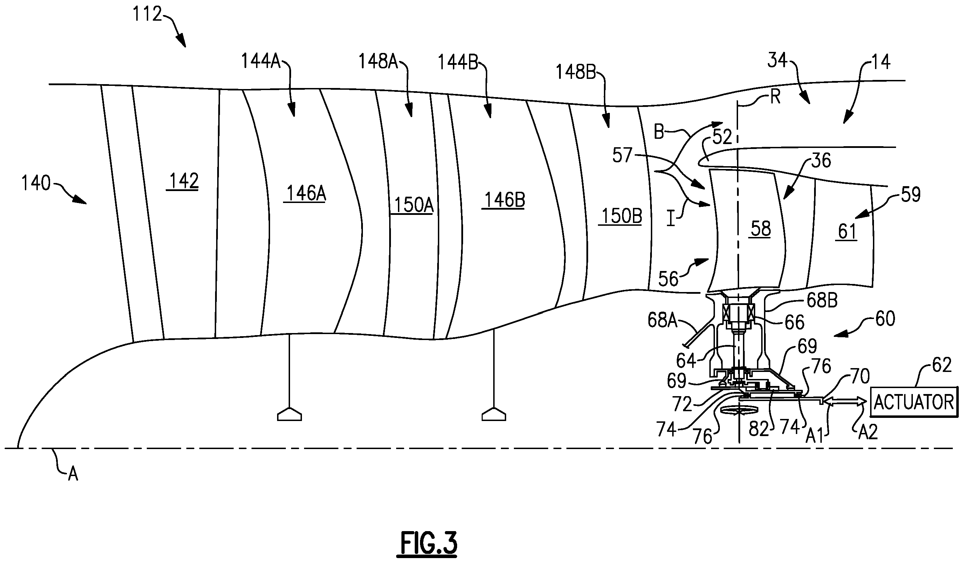

Figure 3 illustrates another example fan section 112 for the gas turbine engine 10. The fan section 112 is similar to the fan section 12 except where described below or shown in the Figures. Like numbers will be used to describe like or similar components. The fan section 112 is used in connection with the same compressor section 14 as described above.

Air enters the fan section 112 through an inlet 140. Once the air enters the inlet 40, it passes over a plurality of inlet guide vanes 142 that are circumferentially spaced around the engine axis A. Immediately downstream of the plurality of inlet guide vanes 142 is a forward fan row 144A having a plurality of fan blades 146A. The forward fan row 144A is separated from an aft fan row 144B having a plurality of fan blades 146B by a forward stator 148A having a plurality of vanes 150A forming a row. An aft stator 148B includes a plurality of vanes 150B and is located immediately downstream of the aft fan row 144B and immediately upstream of the splitter 52 and the variable pitch rotor assembly 56. In the illustrated example, the vanes 150B of the aft stator 148B are fixed from rotation and non-rotatable. In another example, each of the vanes 150B are rotatable about a separate axis transverse to the engine axis A.

As the air passes the fan stator 148B, it reaches the splitter 52 where it is divided between bypass airflow B through the secondary flow path 34 and inner airflow I through the inner flow path 36. The bypass airflow B travels through the secondary flow path 34 located radially outward from the splitter 52 and is ejected out of an aft portion of the gas turbine engine 10. The air entering the inner flow path 36 is further compressed in the variable blade pitch rotor 56 and compressor section 14 before being heated in the combustor section 16 and expanded in the turbine section 18 (See Figures 1 and 3).

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

**Claims**

1. A gas turbine engine (10) comprising:

   a fan section (12; 112);
   a splitter (52) downstream of the fan section (12; 112) at least partially defining a secondary flow path (34) on a radially outer side and an inner flow path (36) on a radially inner side; and
   a variable pitch rotor assembly (56) located at an inlet to the inner flow path (36) including a plurality of variable pitch rotor blades (58).

2. The gas turbine engine (10) of claim 1, wherein the plurality of variable pitch rotor blades (58) rotate about a rotor blade axis (R) that is transverse to an axis of rotation (A) of the gas turbine engine (10), wherein the rotor blade axis (R) is optionally perpendicular to the axis of rotation (A) of the gas turbine engine (10).

3. The gas turbine engine (10) of claim 1 or 2, wherein the fan section (112) includes more than one fan blade row (144A, 144B).

4. The gas turbine engine (10) of any preceding claim, wherein the fan section (12; 112) includes a vane row (48; 148B) immediately downstream of a fan blade row (44; 144B) and immediately upstream of the inner flow path (36).

5. The gas turbine engine (10) of any preceding claim, further comprising an inlet guide vane (42; 142) immediately downstream of an inlet (40; 140) to the fan section (12; 112).

6. The gas turbine engine (10) of any preceding claim, wherein each of the plurality of variable pitch rotor blades (58) include a spindle (64) rotatably supported on at least one bearing (66).

7. The gas turbine engine of claim 6, wherein each of the spindles (64) are attached to a separate lever arm (78) that rotates the spindle (64) in response to movement from a hydraulic actuator (62).

8. The gas turbine engine (10) of any preceding claim, wherein the secondary flow path (34) is a bypass flow path (34).

9. A method of varying a bypass ratio of a gas turbine engine (10) comprising:

driving a fan section (12; 112) with a turbine section (18), wherein the fan section (12; 112) directs air along a secondary flow path (34) and an inner flow path (36); and
varying a pitch of a plurality of variable pitch rotor blades (58) in a variable pitch rotor assembly (56) in the inner flow path (36) in response to a change in the bypass ratio of the gas turbine engine (10).

10. The method of claim 9, including maintaining a high pressure ratio across the plurality of variable pitch rotor blades (58) by varying the pitch of the plurality of variable pitch rotor blades (58).

11. The method of claim 9 or 10, wherein the variable pitch rotor assembly (56) is located in a compressor section (14) of the gas turbine engine (10).

12. The method of any of claims 9 to 11 including increasing the pitch of the plurality of variable pitch rotor blades (58) in response to a decrease in the bypass ratio of the gas turbine engine (10), wherein the pitch of the plurality of variable pitch rotor blades (58) is optionally varied with an actuator (62).

13. The method of any of claims 9 to 12, including decreasing the pitch of the plurality of variable pitch rotor blades (58) in response to an increase in the bypass ratio of the gas turbine engine (10), wherein the pitch of the plurality of variable pitch rotor blades (58) is optionally varied with an actuator (62).

14. The gas turbine engine (10) of any of claims 1 to 8 or the method of any of claims 9 to 13, wherein the fan section (12; 112) includes at least one fan blade row (44; 144B) with a stator (48; 148B) immediately downstream of the at least one fan blade row (44; 144B) and immediately upstream of the variable pitch rotor assembly (56) and the stator (48; 148B) includes a plurality of non-rotatable vanes (50; 150B).

15. The gas turbine engine (10) of any of claims 1 to 8 or the method of any of claims 9 to 13, wherein the fan section (12; 112) includes at least one fan blade row (44; 144B) with a stator (48; 148B) immediately downstream of the at least one fan blade row (44; 144B) and immediately upstream of the variable pitch rotor assembly (56) and the stator (48; 148B) includes a plurality of rotatable vanes (50; 150B) configured to rotate about an axis through a corresponding vane (50; 150B).

**FIG.1**

EP 4 112 887 A1

FIG.2

FIG.3

EP 4 112 887 A1

FIG.4

$(C\Theta 2_b - C\Theta 1_b) < (C\Theta 2_a - C\Theta 1_a)$

$\alpha 1_b > 0$

$C1_a = Cx1_a$
$(\alpha 1_a = 0, )$

AXIAL DIRECTION x

EP 4 112 887 A1

FIG.5

EP 4 112 887 A1

Europäisches
Patentamt

European
Patent Office

Office européen
des brevets

# EUROPEAN SEARCH REPORT

Application Number

EP 22 19 1978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/244269 A1 (LOUDET CLAUDE [FR]) 3 November 2005 (2005-11-03) * paragraphs [0003] - [0006], [0013]; figure 1 * | 1-4,6-14 | INV. F01D17/16 F02C9/20 F04D29/56 F02K3/075 |
| | ----- | | |
| X | US 4 068 471 A (SIMMONS JOHN ROBERT) 17 January 1978 (1978-01-17) * column 3, lines 5-11 * * column 3, line 67 - column 4, line 18; figures 1,2 * | 1-3,5, 8-13,15 | |
| | ----- | | |
| X | JP H05 66253 U (ISHIKAWAJIMA-HARIMA HEAVY INDUSTRIES CO., LTD.) 3 September 1993 (1993-09-03) * figure 4 * | 1,2,4,6, 8-14 | |
| | ----- | | |
| X | US 5 806 303 A (JOHNSON JAMES E [US]) 15 September 1998 (1998-09-15) * column 8, line 9 - line 46; figure 1 * | 1,2,4, 6-14 | |
| | ----- | | |
| X,P | EP 3 460 201 A2 (ROLLS ROYCE PLC [GB]) 27 March 2019 (2019-03-27) * paragraph [0061]; figure 1 * | 1,2,8-13 | TECHNICAL FIELDS SEARCHED (IPC) |
| | ----- | | F01D |
| X | US 4 080 785 A (KOFF BERNARD L ET AL) 28 March 1978 (1978-03-28) * paragraphs [0045], [0046]; figures 1,2 * | 1-4,6-9, 11-14 | F02C F04D F02K |
| | ----- | | |

The present search report has been drawn up for all claims

| Place of search | Date of completion of the search | Examiner |
|---|---|---|
| Munich | 29 November 2022 | Pileri, Pierluigi |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..............................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 19 1978

This annex lists the patent family members relating to the patent documents cited in  the above-mentioned European search report.
The members are as contained in the European Patent Office EDP file on
The European Patent Office is in no way liable for these particulars which are merely given for the purpose of information.

29-11-2022

| Patent document cited in search report | | Publication date | Patent family member(s) | | Publication date |
|---|---|---|---|---|---|
| US 2005244269 | A1 | 03-11-2005 | EP | 1500824 A1 | 26-01-2005 |
| | | | ES | 2394203 T3 | 23-01-2013 |
| | | | FR | 2858027 A1 | 28-01-2005 |
| | | | US | 2005244269 A1 | 03-11-2005 |
| US 4068471 | A | 17-01-1978 | BE | 843001 A | 18-10-1976 |
| | | | CA | 1058888 A | 24-07-1979 |
| | | | DE | 2626406 A1 | 30-12-1976 |
| | | | FR | 2315006 A1 | 14-01-1977 |
| | | | GB | 1546723 A | 31-05-1979 |
| | | | IT | 1062408 B | 10-10-1984 |
| | | | JP | S521222 A | 07-01-1977 |
| | | | JP | S5924261 B2 | 08-06-1984 |
| | | | US | 4068471 A | 17-01-1978 |
| JP H0566253 | U | 03-09-1993 | NONE | | |
| US 5806303 | A | 15-09-1998 | NONE | | |
| EP 3460201 | A2 | 27-03-2019 | EP | 3460201 A2 | 27-03-2019 |
| | | | US | 2019093502 A1 | 28-03-2019 |
| US 4080785 | A | 28-03-1978 | BE | 825925 A | 16-06-1975 |
| | | | CA | 1020365 A | 08-11-1977 |
| | | | CH | 587416 A5 | 29-04-1977 |
| | | | DE | 2506500 A1 | 28-08-1975 |
| | | | FR | 2262200 A1 | 19-09-1975 |
| | | | GB | 1493049 A | 23-11-1977 |
| | | | IL | 46522 A | 31-07-1977 |
| | | | IT | 1031935 B | 10-05-1979 |
| | | | JP | S598662 B2 | 25-02-1984 |
| | | | JP | S50124012 A | 29-09-1975 |
| | | | NL | 7502219 A | 27-08-1975 |
| | | | SE | 414811 B | 18-08-1980 |
| | | | US | 4080785 A | 28-03-1978 |

EPO FORM P0459

For more details about this annex : see Official Journal of the European Patent Office, No. 12/82